# EUROPÄISCHE PATENTSCHRIFT

(11) **EP 1 888 386 B1**
(45) Veröffentlichungstag und Bekanntmachung des Hinweises auf die Patenterteilung: **04.08.2010**
(21) Anmeldenummer: 06743131.2
(22) Anmeldetag: 08.06.2006
(51) Int. Cl.: B60T 8/48

(54) **KOMPENSATION VERRINGERTER BREMSWIRKUNG EINER HYDRAULISCHEN BREMSANLAGE FÜR EIN LANDFAHRZEUG**
COMPENSATION OF REDUCED BRAKE EFFECT OF A HYDRAULIC BRAKE SYSTEM FOR A LAND CRAFT
COMPENSATION D'UNE BAISSE D'EFFICACITE DE FREINAGE D'UN SYSTEME DE FREINAGE HYDRAULIQUE POUR VEHICULE TERRESTRE

(30) Priorität: 09.06.2005 DE 102005026734
(43) Veröffentlichungstag der Anmeldung: 20.02.2008
(73) Patentinhaber: Lucas Automotive GmbH, 56070 Koblenz (DE)
(72) Erfinder: ALFORD, Nicholas, 56323 Waldesch (DE); KNECHTGES, Josef, 56727 Mayen (DE); MARX, Andreas, 56294 Kalt (DE); SCHWARZ, Michael, 56070 Koblenz (DE)
(74) Vertreter: Schmidt, Steffen
(86) Internationale Anmeldenummer: PCT/EP2006/005494
(87) Internationale Veröffentlichungsnummer: WO 2006/131369

(56) Entgegenhaltungen:
- WO-A-98/43857
- WO-A-02/070312
- WO-A-03/093082
- DE-A1- 10 147 351
- DE-A1- 19 501 760
- DE-A1- 19 936 435

## Beschreibung

### Gebiet der Erfindung

Die vorliegende Erfindung betrifft im Allgemeinen Bremsanlagen für Landfahrzeuge und insbesondere eine Kompensation von Betriebszuständen solcher Bremsanlagen mit verringerter Bremswirkung.

### Hintergrund der Erfindung

Bei Bremsanlagen für Landfahrzeuge ist es bekannt, dass deren Bremswirkung bei starker Beanspruchung nachlässt. Dies wir auch als "Fading" bezeichnet. Ursachen hierfür umfassen die bei starker Beanspruchung (z.B. bei hohen Bremsdrücken) entstehende Temperaturen, die eine erhöhte Volumenaufnahmekapazität für Hydraulikfluid des Bremssystems insgesamt und insbesondere einzelner Radbremsen bewirken. Dadurch ist es beispielsweise möglich, dass Wegreserven einzelner Komponenten einer Bremsanlage ( z.B. Hauptzylinder, Bremsverstärker, Bremspedal) aufgebraucht sind, bevor ein ausreichender Bremsdruck erzeugt werden kann. Dies kann dazu führen, dass die Bremsanlage eine vom Fahrer gewünschte Bremswirkung nicht bereitstellen kann.

Aus dem Stand der Technik sind Bremsanlagen bekannt, bei denen die Funktion des Vakuum-Bremskraft-Verstärkers durch eine hydraulische Bremskraftverstärkung ersetzt wird. Ein derartiges System wird iri DE 195 01 760 A1 beschrieben. Dabei wird abhängig vom Fahrerwunsch durch die Rückförderpumpe des ABS/ASR-Hydroaggregates in den Radbremszylindern aktiv Druck aufgebaut. Die Rückförderpumpe, die Ansaug- und Umschaltventile werden in Abhängigkeit von einem Signal angesteuert, das die Betätigung des Bremspedals repräsentiert.

### Aufgabe der Erfindung

Aufgabe der Erfindung ist es, bei hydraulischen Bremsanlagen nachlassende Bremswirkungen (Fading) wenigstens teilweise zu kompensieren.

### Kurzbeschreibung der Erfindung

Zur Lösung der obigen Aufgabe stellt die vorliegende Erfindung eine Bremsanlage und ein Verfahren gemäß den unabhängigen Ansprüchen bereit.

Die erfindungsgemäße hydraulische Bremsanlage ist für ein Landfahrzeug vorgesehen und weist eine Steuerung mit Eingängen zum Empfang von Eingangsparametern, die Betriebszustände des Landfahrzeugs angeben, und Ausgängen zur Ausgabe von Steuersignalen für die Bremslage auf. Ferner umfasst die hydraulische Bremsanlage wenigstens eine Radbremse und wenigstens einen Hydraulikfluidspeicher, um Hydraulikfluid zu speichern. Um Hydraulikfluid in der Bremsanlage gesteuert zu fördern, ist eine steuerbare Pumpe vorgesehen, die insbesondere zur gesteuerten Zufuhr von Hydraulikfluid zu der wenigstens einen Radbremse vorgesehen ist. Die hydraulische Bremsanlage weist in vorbestimmten Teilen, Bereichen und/oder Komponenten eine vorbestimmte Aufnahmekapazität, Aufnahmevermögen oder Volumenaufnahme für Hydraulikfluid auf. Die vorbestimmte Aufnahmekapazität kann beispielsweise in der wenigstens einen Radbremse und/oder hydraulischen Verbindungen oder Leitungen vorliegen, die Hydraulikfluid zu und von der wenigstens einen Radbremse führen.

Hier, im Folgenden und insbesondere in den Ansprüchen, ist unter "eingerichtet" zu verstehen, dass die Steuerung wenigstens strukturell ausgeführt ist, um die jeweils angegebenen technischen funktionalen Merkmale bereitzustellen. Darüber hinaus kann die Steuerung auch programmiert sein, um die jeweils angegebenen technischen funktionalen Merkmale bereitzustellen, beispielsweise unter Verwendung von Softwarecode oder Computerprogrammen. So ist es vorgesehen, dass die Funktionen der Steuerung durch eine entsprechende Hardwarestruktur (z. B. ASIC) bereitgestellt werden. Die Steuerung kann auch so ausgeführt sein, dass sie eine auch allgemein verwendbare Hardwarestruktur aufweist, die in Verbindung mit einer entsprechenden Programmierung (z. B. fest implementierter Softwarecode, auf einem computerlesbaren Speichermedium bereitgestelltes Computerprogramm, zum Betrieb herunterladbarer Softwarecode oder Computerprogramm) die technischen funktionalen Merkmale der Steuerung bereitstellt.

Erfindungsgemäß ist es vorgesehen, dass die Steuerung aus den Eingangsparametern eine aktuelle Aufnahmekapazität der Bremsanlage für Hydraulikfluid zu ermitteln vermag. Wird festgestellt, dass die aktuelle Aufnahmekapazität verglichen mit der vorbestimmten Aufnahmekapazität erhöht ist, also die vorbestimmten Teile, Bereiche und/oder Komponenten der Bremsanlage mehr Hydraulikfluid aufnehmen können, ist es erfindungsgemäß vorgesehen, dass die Steuerung Steuersignale bereitstellt, um die Pumpe so zu betreiben, dass der wenigstens einen Radbremse eine Menge an Hydraulikfluid zugeführt wird, die wenigstens der Kapazitätserhöhung entspricht.

Diese Zufuhr an Hydraulikfluid kann auch als "Vorfüllen" oder "Auffüllen" der wenigstens einen Radbremse mit Hydraulikfluid bezeichnet werden.

Bei einer Ausführungsform wird die wenigstens eine Radbremse "vorausschauend vorgefüllt".

Dabei ist es vorgesehen, dass die Steuerung die aktuelle Aufnahmekapazität während eines Betriebszustands der Bremsanlage ermittelt, in dem die Bremsanlage nicht betätigt ist, also keine Bremswirkung erzeugt.

Ferner ist es vorgesehen, dass dabei die Steuerung Steuersignale für die Pumpe so bereitstellt, dass eine zur Kompensation der Kapazitätserhöhung geeignete Menge an Hydraulikfluid der wenigstens einen Radbremse ebenfalls während eines solchen, unbetätigten Betriebszustands der Bremsanlage zugeführt wird. Insbesondere ist es vorgesehen, dass der wenigstens einen Radbremse eine erste Hydraulikfluidmenge zugeführt wird, die im Wesentlichen der Kapazitätserhöhung entspricht.

Vorzugsweise wird bei dieser Ausführungsform Hydraulikfluid verwendet, das in einem Hydraulikfluidspeicher bevorratet ist, der zur Versorgung eines Hauptzylinders der Bremsanlage dient.

Die Bremsanlage kann eine Ventilanordnung umfassen, die in einem ersten Betriebszustand eine erste hydraulische Verbindung zur Zufuhr von durch einen Fahrer erzeugtem Bremsdruck zu der wenigstens einen Radbremse sperrt und in einem zweiten Betriebszustand die erste hydraulische Verbindung herstellt. Dabei ist es vorgesehen, dass die Steuerung, wenn eine erhöhte Aufnahmekapazität ermittelt ist, Steuersignale für die Ventilanordnung herzustellen vermag, um die Ventilanordnung in den ersten Betriebszustand zu bringen.

In einem dritten Betriebszustand kann die Ventilanordnung die erste hydraulische Verbindung sperren und eine zweite hydraulische Verbindung ebenfalls sperren, die zwischen der Eingangsseite der Pumpe und dem Hydraulikfluidspeicher vorgesehen ist. Dabei ist es vorgesehen, dass die Steuerung Steuersignale für die Ventilanordnung zu erzeugen vermag, die die Ventilanordnung in den dritten Betriebszustand bringen, und ferner Steuersignale für die Pumpe bereitzustellen vermag, die den Betrieb der Pumpe beenden, wenn die erste Hydraulikfluidmenge zugeführt ist.

Vorzugsweise werden bei dieser Ausführungsform die Steuersignale der Steuerung zum Betrieb der Pumpe, um Hydraulikfluid der wenigstens einen Radbremse zuzuführen, zu einem Zeitpunkt bereitgestellt, der von wenigstens einem der Eingangsparameter abhängt. Insbesondere ist hierbei vorgesehen, dass diese Steuersignale zu einem Zeitpunkt bereitgestellt werden, dem nachfolgend eine Betätigung der Bremsanlage, d.h. ein Einleiten eines Bremsvorgangs, erwartet wird.

Bei einer anderen Ausführungsform ermittelt die Steuerung die aktuelle Aufnahmekapazität während eines Betriebszustands der Bremsanlage, in dem die Bremsanlage betätigt ist, also Bremswirkung erzeugt.

Diese Ausführungsform sorgt im Gegensatz zu der vorherigen Ausführungsform nicht zu einem "vorausschauendem Vorfüllen", sondern zu einem "Auffüllen" der wenigstens einen Radbremse während eines Bremsvorgangs. Bei dieser Ausführungsform wird die Fahrzeugsicherheit erheblich erhöht, da dem Bremsfading sogar in dem Extremfall entgegengewirkt wird, dass der zur Verfügung stehende Betätigungsweg des Bremspedals aufgrund der erhöhten Volumenaufnahmekapazität des Bremssystems (vollständig) aufgebraucht ist, sei es, weil das Pedal selbst oder die Kolben des Hauptzylinders in Anschlag geraten sind.

Dabei ist vorgesehen, dass die Steuerung Steuersignale für die Pumpe bereitzustellen vermag, um der wenigstens einen Radbremse eine zur Aufnahmekapazitätskompensation geeignete Menge an Hydraulikfluid während eines solchen, betätigten Betriebszustands der Bremsanlage zuzuführen. Insbesondere ist es vorgesehen, der wenigstens einen Radbremse eine zweite Hydraulikfluidmenge zuzuführen, die zu einem Betriebszustand der wenigstens einen Radbremse führt, bei dem eine Antiblockierregelung erforderlich ist, um ein Blockieren oder eine Blockierneigung der Radbremse(n) bzw. zugeordneter Räder zu verhindern.

Auch diese Ausführungsform kann die oben genannte Ventilanordnung mit ersten und zweiten Betriebszuständen umfassen. Allerdings ist es hier vorgesehen, dass die Steuerung, wenn die Ventilanordnung den zweiten Betriebszustand aufweist, Steuersignale für die Pumpe bereitzustellen vermag, die eine Zufuhr der zweiten Hydraulikfluidmenge zu der wenigstens einen Radbremse bewirken.

Vorzugsweise wird die zweite Hydraulikfluidmenge aus einem Hydraulikfluidspeicher zugeführt, der ein Niederdruckhydraulikfluidspeicher der Bremsanlage ist, der zur Aufnahme von Hydraulikfluid dient, das während einer Druckabbauphase bei Antiblockierregelung aus Radbremsen fließt.

Vorzugsweise wird die Bremsanlage so gesteuert, dass die zweite Hydraulikfluidmenge, die zu einem eine Antiblockierregelung erfordernden Betriebszustand führt, einer oder mehreren Radbremsen zugeführt wird, die für eine Vorderachse bzw. Vorderrädern des Landfahrzeugs vorgesehen ist bzw. sind.

Vorzugsweise ermittelt die Steuerung die aktuelle Aufnahmekapazität oder die Aufnahmekapazitätserhöhung auf Grundlage von Eingangsparametern, die Aussagen über Temperaturen und/oder Temperaturänderungen der Bremsanlage in den Teilen, Bereichen und/oder Komponenten erlauben, für die die aktuelle Aufnahmekapazität bzw. die Aufnahmekapazitätserhöhung ermittelt werden soll.

Das erfindungsgemäße Verfahren ist zur Steuerung einer hydraulischen Bremsanlage eines Landfahrzeugs vorgesehen, wobei von einer Bremsanlage ausgegangen wird, die wenigstens eine Radbremse und eine vorbestimmte Aufnahmekapazität für Hydraulikfluid in vorbestimmten Teilen, Bereichen und/oder Komponenten aufweist. Bei dem erfindungsgemäßem Verfahren wird ermittelt, ob sich eine aktuelle Aufnahmekapazität dieser Teile, Bereiche und/oder Komponenten der Bremsanlage gegenüber der vorbestimmten Aufnahmekapazität erhöht hat. Ist dies der Fall, wird Hydraulikfluid zu der wenigstens einen Radbremse in einer Menge gesteuert zugeführt, die wenigstens der Kapazitätserhöhung entspricht.

Bevorzugte Ausführungsformen des erfindungsgemäßen Verfahrens sind in unabhängigen Verfahrensansprüchen definiert.

### Kurzbeschreibung der Zeichnung

In der folgenden Beschreibung bevorzugter Ausführungsformen wird auf die beigefügte Zeichnung Bezug genommen, die zeigt:

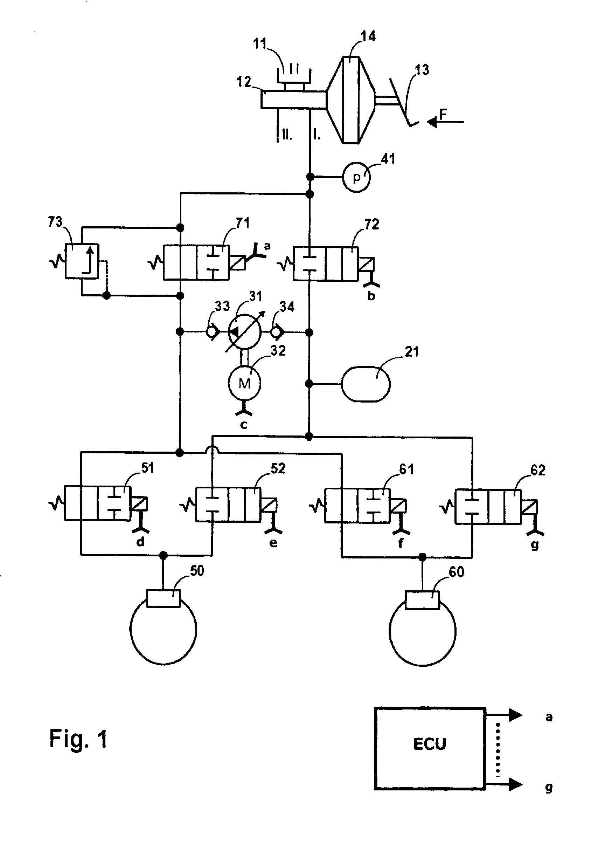

Fig. 1 eine schematische Darstellung einer erfindungsgemäßen Bremsanlage.

### Beschreibung bevorzugten Ausführungsformen

Fig. 1 zeigt eine schematische Darstellung einer bevorzugten Ausführungsform einer Bremsanlage. Die Bremsanlage arbeitet mittels Hydraulikfluid, die zum Teil in einem Behälter 11 bevorratet ist. Zum Erzeugen von Bremsdruck, der durch unter Druck setzen des Hydraulikfluids entsteht, dient ein Hauptzylinder 12, der vom Fahrer durch ein Pedal 13 betätigt werden kann. Wie in den Figuren dargestellt, kann optional ein zwischen dem Hauptzylinder 12 und dem Pedal 13 angeordneter Bremskraftverstärker 14 vorgesehen sein, um eine vom Fahrer eingeleitete Kraft F - vorzugsweise pneumatisch oder hydraulisch - zu verstärken.

Von dem Hauptzylinder 12 ausgehend werden ein erster und zweiter Bremskreis I., II. versorgt, wobei jeder Bremskreis zwei Radbremsen umfasst. Je nachdem, welche Radbremsen des Fahrzeugs von welchem Bremskreis umfasst werden, ergibt sich eine Aufteilung zwischen Vorder- und Hinterachse, wobei ein Bremskreis Radbremsen der Vorderachse und der andere Bremskreis Radbremsen der Hinterachse umfassen kann oder ein Bremskreis die Radbremse eines Vorderrades und die Radbremse des diagonal gegenüberliegenden Hinterrades und der andere Bremskreis die Radbremsen des anderen Vorderrades und des anderen Hinterrades umfassen kann.

Im Folgenden wird davon ausgegangen, dass die Bremskreise I. und II. im Wesentlichen identisch aufgebaut sind. Daher ist nur der Bremskreis I. im Detail gezeigt. Die folgenden Ausführungen unter Bezugnahme auf den Bremskreis I. gelten entsprechend für den Bremskreis II.

Der Bremskreis I. umfasst zwei Radbremsen 50 und 60. Zum Steuern von Bremsdruckverläufen in den Radbremsen 50 und 60 sind eine Ventile 51 und 52 umfassende erste Ventilanordnung und eine Ventile 61 und 62 umfassende zweite Ventilanordnung vorgesehen.

Die Ventile 51, 52, 61 und 62 sind hier als durch Elektromagnete betätigbare 2/2-Wegeventile dargestellt.

Der Bremskreis I. umfasst eine Ventile 71, 72 und 73 aufweisende Ventileinrichtung. Die Ventile 71 und 72 sind hier als durch Elektromagnete betätigbare 2/2-Wegeventile dargestellt.

Fig. 1 zeigt die Ventile 51, 61 und 71 jeweils in einem geöffneten Betriebszustand oder Durchflussstellung, während die Ventile 52, 62 und 72 jeweils in einem geschlossenen Betriebszustand oder Sperrstellung gezeigt sind. Diese Betriebszustände oder Stellungen werden im Folgenden auch als Grundstellung bezeichnet.

Bei dem in Fig. 1 dargestellten Betriebszustand des Bremskreises I. besteht aufgrund des geöffneten Betriebszustandes des Ventils 71 eine hydraulische Verbindung zwischen dem Hauptzylinder 12 und den Radbremsen 50 und 60. Dieser Betriebszustand wird für über Betätigungen des Pedals 13 steuerbare Bremsvorgänge, die auch als Normalbremsvorgänge bezeichnet werden können, verwendet. Betätigungen des Hauptzylinders 12 mittels des Pedals 13, optional unter Mitwirkung des Bremskraftverstärkers 14, erzeugen Bremsdrücke in dem Bremskreis I. und damit in den Radbremsen 50 und 60.

Die gezeigte Bremsanlage ist für eine sogenannte Antiblockierregelung ausgelegt, bei der während eines Bremsvorgangs ein Blockieren der Räder verhindert werden soll. Hierfür werden in den Radbremsen 50 und 60 wirkenden Bremsdrücke individuell moduliert. Dies geschieht durch Einstellen in zeitlicher Folge wechselnder Druckaufbau-, Druckhalte- und Druckabbauphasen, die im Folgenden detaillierter erläutert sind.

Die Druckaufbau-, -halte- und -abbauphasen werden durch geeignete Steuerung der den Radbremsen 50 und 60 zugeordneten Ventile 51, 52 bzw. 61, 62 mittels einer elektronischen Steuerung ECU erreicht.

Die elektronische Steuerung ECU kann über eine Reihe von nicht dargestellten Eingängen Betriebszustände eines Fahrzeugs angebende Signale empfangen. Beispielsweise ist es vorgesehen, der elektronischen Steuerung ECU Signale von Raddrehzahlsensoren, Giergeschwindigkeitssensoren, Querbeschleunigungssensoren etc. zuzuführen.

Die elektronische Steuerung ECU weist Ausgänge für Steuersignale a, ... , g zur Steuerung der Ventile 51, 52, 61, 62, 71, und 72 sowie zur Steuerung eines zum Betrieb einer Pumpe 31 vorgesehenen Motors 32 auf.

Bei einem fahrergesteuerten normalen Bremsvorgang mit Antiblockierregelung erfolgt die Steuerung durch die elektronische Steuerung ECU in Abhängigkeit von Betriebszustände des Fahrzeugs angebenden Messgrößen (z. B. Geschwindigkeit, Beschleunigung, Raddrehzahlen, Giergeschwindigkeit, Querbeschleunigung etc.) und Messgrößen, die einen durch den Fahrer gewünschten Bremsvorgang angeben (z. B. Betätigung des Pedals 13, Hydraulikdruck am Ausgang des Hauptzylinders 12 etc.). Der vom Fahrer gewünschte Bremsvorgang kann auch über den im Hauptzylinder 12 erzeugten Bremsdruck P ermittelt werden, für dessen Erfassung ein Sensor 41 vorgesehen ist.

Während eines normalen Bremsvorgangs ohne Antiblockierregelung befinden sich die Ventile 51, 52 und 61, 62 jeweils in ihren Grundstellungen. Stellt die elektronische Steuerung ECU beispielsweise fest, dass den Radbremsen 50 und 60 zugeordnete Rädern zum Blockieren neigen oder blockieren, bewirkt die elektronische Steuerung ECU für die Radbremsen 50 und 60 jeweils eine Druckhaltephase. Führen die Druckhaltephasen nicht dazu, dass die Blockierneigung bzw. das Blockieren endet, bewirkt die elektronische Steuerung ECU für die Radbremsen 50 und 60 jeweils eine Druckabbauphase so lange bis die Blockierneigung bzw. das Blockieren beendet ist. Danach folgen unter Steuerung der elektronischen Steuerung ECU Druckaufbauphasen für die Radbremsen 50 und 60, in denen die in den Radbremsen 50 und 60 wirkenden Bremsdrücke gemäß dem vom Fahrer gewünschten Bremsvorgang aufgebaut werden.

Während der Druckhaltephasen werden unter Steuerung der elektronischen Steuerung ECU die Ventile 51 und 61 jeweils in eine geschlossene Betriebsposition oder Sperrstellung gebracht. Die Ventile 52 und 62 bleiben dabei in ihren beim normalen Bremsvorgang vorliegenden Grundstellungen.

Das Schließen der Ventile 51 und 61 führt zu einer hydraulischen Abkopplung der Radbremsen 50 und 60, wodurch die in den Radbremsen 50 und 60 wirkenden Bremsdrücke konstant gehalten werden.

Während der Druckabbauphasen werden die Ventile 51 und 61 in ihren geschlossenen Betriebspositionen gehalten und die Ventile 52 und 62 von der elektronischen Steuerung ECU so angesteuert, dass sie jeweils einen geöffneten Betriebszustand oder Durchflussstellung annehmen. Aufgrund der geöffneten Ventile 52 und 62 kann Hydraulikfluid aus den Radbremsen 50 und 60 abfließen, wodurch die in den Radbremsen 50 und 60 wirkenden Bremsdrücke verringert werden. Dabei ausfließendes Hydraulikfluid kann in einem Niederdruckspeicher 21 zwischengespeichert werden. Während einer Druckaufbauphase nehmen die Ventile 51, 52 und 61 und 62 ihre Grundsstellungen ein, dass heißt die Ventile 51 und 61 werden durch die elektronische Steuerung ECU geöffnet, während die Ventile 52 und 62 geschlossen werden. Zur Erhöhung der in den Druckabbauphasen verringerten Bremsdrücken in den Radbremsen 50 und 60 steuert die elektronische Steuerung ECU den Motor 32 und damit die Pumpe 31 so an, dass über die Ventile 51 und 61 die in den Radbremsen 50 und 60 wirkenden Bremsdrücke auf dem vom Fahrer gewünschten Bremsvorgang entsprechende Niveaus erhöht werden. Dabei fördert die Pumpe 31 in den Druckabbauphasen abgeflossenes Hydraulikfluid, gegebenenfalls aus dem Niederdruckspeicher 21, zurück.

Die z. B. als Radialkolbenpumpe ausgeführte Pumpe 31 ist entgegen ihrer Förderrichtung sperrend, beispielsweise mittels eines Sperrventils 33 am Ausgang der Pumpe 31 und eines Sperrventils 34 am Eingang der Pumpe 31.

Die Drehzahl des Elektromotors 32 ist über das Steuersignal c der elektronischen Steuerung ECU einstell- bzw. regelbar, wodurch die Fördermenge der Pumpe 31 gesteuert werden kann. Der Elektromotor 32 kann gleichzeitig eine hier nicht gezeigte Pumpe des zweiten Bremskreises II. betätigen.

Automatische Bremsvorgänge erfolgen in der Regel unabhängig von einer vom Fahrer am Pedal 13 eingeleiteten Kraft F. Solche sind z. B. eine Antriebsschlupfregelung (ASR), die ein Durchdrehen einzelner Räder bei einem Anfahrvorgang durch gezieltes Abbremsen verhindert, eine Fahrdynamikregelung (ESP), die das Fahrzeugverhalten im Grenzbereich durch gezieltes Abbremsen einzelner Räder an den Fahrerwunsch und die Fahrbahnverhältnisse anpasst, oder eine adaptive Geschwindigkeitsregelung (ACC), die durch unter anderem selbsttätiges Bremsen einen Abstand des eigenen Fahrzeugs zu einem vorausfahrenden Fahrzeug einhält.

Für einen automatischen Bremsvorgang werden die Ventile 71 und 72 durch die elektronischen Steuerungen ECU so angesteuert, dass das Ventil 71 einen geschlossenen Betriebszustand oder eine Sperrstellung und das Ventil 72 einen offenen Betriebszustand oder eine Durchflussstellung einnehmen. Die Ventile 51, 52, 61 und 62 bleiben dabei in ihren Grundstellungen. Aufgrund des geschlossenen Ventils 71, der geöffneten Ventile 51 und 61 und der geschlossenen Ventile 52 und 62 sind die Radbremsen 50 und 60 insofern von dem Hauptzylinder 12 bzw. dem Bremskreis II. abgekoppelt, dass keine von außen zugeführten Bremsdrücke, das heißt durch Betätigung des Pedals 13 bewirkte Bremsdrücke, zugeführt werden können. Auch das geöffnete Ventil 72 erlaubt keine Zufuhr von externem Bremsdruck, weil die Ventile 52 und 62 geschlossen sind und die Pumpe 31 ebenfalls wie ein geschlossenes Ventil wirkt. Das geöffnete Ventil 72 ermöglicht es allerdings der Pumpe 31, Hydraulikfluid auch aus dem Behälter 11 anzusaugen, um, wie im Folgenden detailliert beschrieben, Bremsdrücke in den Radbremsen 50 und 60 zu erzeugen.

Um für automatische Bremsvorgänge gewünschte Bremskräfte in den Radbremsen 50 und 60 zu erzeugen, steuert die elektronische Steuerung ECU den Motor 32 bzw. die Pumpe 31 entsprechend. Zum Modulieren oder für eine Feineinstellung der Bremsdrücke in den Radbremsen 50 und 60 kann die elektronische Steuerung ECU die Ventile 51, 52 bzw. 61, 62 vergleichbar zu der oben beschriebenen Antiblockierregelung steuern.

Um Beschädigungen des Bremskreises I. zu vermeiden, kann das Ventil 73 in Form eines Druckbegrenzungsventils vorgesehen sein. Das Ventil 73, das sich normalerweise in einem geschlossenen Betriebszustand befindet, nimmt einen Bremsdruck abbauenden, geöffneten Betriebszustand ein, wenn am Ausgang der Pumpe 31 zu hoher Druck vorliegt.

Beim Betrieb einer Bremsanlage, wie beispielsweise oben beschrieben, kann es zu verringerten bzw. nachlassenden Bremswirkungen kommen. Unter einer verringerten oder einer nachlassenden Bremswirkung ist hier insbesondere zu verstehen, dass die Bremsanlage stärker bzw. immer stärker betätigt werden muss, um eine gewünschte Bremswirkung zu erreichen. Derartige verschlechterte Bremswirkungen werden auch als "Fading" bezeichnet und treten im Allgemeinen bei starker Beanspruchung der Bremsanlage auf. Unter einer starken Beanspruchung der Bremsanlage ist hierbei insbesondere zu verstehen, dass der Betrieb der Bremsanlage zu einer Erwärmung von Hydraulikfluid führenden Komponenten, insbesondere von Radbremsen, kommt. Dabei kann es aufgrund der Erwärmung zu einer gegenüber dem nicht erwärmten Zustand erhöhten Aufnahmekapazität oder Aufnahmevermögen von Hydraulkfluid führenden Komponenten kommen. Dies hat zur Folge, dass zur Erzeugung eines gewünschten Bremsdrucks mehr Hydraulikfluid erforderlich ist.

Bei automatischen Bremsvorgängen kann dies erreicht werden, indem die Pumpe eines Bremskreises, der eine erhöhte Aufnahmekapazität für Hydraulikfluid aufweist, so betrieben wird, dass so lange Hydraulikfluid zugeführt wird, bis der gewünschte Bremsdruck erreicht ist. Dies hat den Nachteil, dass der gewünschte Bremsdruck bei gleicher Pumprate langsamer erreicht wird. Eine Erhöhung der Pumprate, um die Zeit bis zur Erzeugung eines gewünschten Bremsdrucks zu verringern oder verglichen mit einem Zustand mit normaler Aufnahmekapazität gleichzuhalten, ist in Abhängigkeit der Auslegung des Bremskreises und insbesondere der Pumpe, wenn überhaupt, nur eingeschränkt möglich.

Bei Bremsvorgängen, bei denen Bremsdruck wenigstens teilweise durch den Fahrer aufgebaut wird, kann die aufgrund einer Kapazitätserhöhung erforderliche Menge an Hydraulikfluid bereitgestellt werden, indem der Fahrer die Bremsanlage stärker betätigt, d.h. das Bremspedal weiter durchdrückt. Dabei können Wegreserven von vom Fahrer unmittelbar und mittelbar betätigten Komponenten der Bremsanlage nicht ausreichen, um auch hohe Bremsdrücke, beispielsweise für eine Vollbremsung, zu erzeugen. Selbst wenn der Fahrer durch eine entsprechende stärkere Betätigung der Bremsanlage deren erhöhte Aufnahmekapazität für Hydraulikfluid kompensieren kann, werden bei gleicher Betätigungsgeschwindigkeit gewünschte Bremsdrücke langsamer erzeugt. Um einen gewünschten Bremsdruck schneller zu erzeugen, kann der Fahrer die Bremsanlage schneller betätigen, d.h. das Bremspedal schneller niederdrücken, was aber zu unerwünschten, unangenehmen und kritischen Bremsvorgängen führen kann. Diese Vorgehensweisen sind aber spätestens dann nicht ausreichend, wenn keine Reserven zur Verfügung stehen, um den Bremsdruck weiter zu erhöhen.

Zur Lösung dieses Problems ist es erfindungsgemäß im Allgemeinen vorgesehen, wenn bei einer Bremsanlage eine verschlechterte Bremswirkung aufgrund erhöhter Aufnahmekapazität für Hydraulikfluid vorliegt, eine Menge an Hydraulikfluid zuzuführen, die wenigstens der Kapazitätserhöhung entspricht.

Zur Veranschaulichung dieser Vorgehensweise sind im Folgenden bevorzugte Ausführungsformen erläutert, bei denen eine erhöhte Aufnahmekapazität für Hydraulikfluid einerseits vor einem Bremsvorgang und andererseits während eines Bremsvorgangs festgestellt wird.

Bei einer Ausführungsform wird ermittelt, ob sich die Aufnahmekapazität des Bremskreises I. und/oder des Bremskreises II. gegenüber dem Normalzustand erhöht hat oder davon auszugehen oder zu erwarten ist, dass eine Aufnahmekapazitätserhöhung vorliegt bzw. eintreten kann. Um eine verschlechterte Bremswirkung der Bremslage zu ermitteln, abzuschätzen oder vorauszusagen, können unterschiedliche Parameter herangezogen werden. Beispielsweise ist es vorgesehen, einen oder mehrere der folgenden Parameter zu verwenden, um insbesondere für eine Aufnahmekapazitätserhöhung relevante Temperaturen der Bremsanlage unmittelbar und mittelbar zu ermitteln:
- Temperaturen der Radbremsen 50, 60
- Anzahl von Betätigungen des Bremspedals 13 innerhalb eines vorbestimmten Zeitraums optional in Verbindung mit dabei im Hauptzylinder 12 erzeugten Bremsdrücken
- Verhältnis von Raddrehzahlen und Fahrzeugverzögerungen
- Pumpdauer und/oder Pumprate der Pumpe(n) 31

Diese Parameter sind lediglich als Beispiele zu verstehen. Jeder Parameter, der Aussagen über die Aufnahmekapazität für Hydraulikfluid erlaubt, kann verwendet werden.

Um eine Aufnahmekapazitätsänderung zu ermitteln, abzuschätzen oder vorauszusagen, erhält die Steuerung ECU über einen oder mehrere ihrer Eingänge einen oder mehrere Eingangsparameter, der bzw. die Aussagen über die aktuelle Aufnahmekapazität der Bremsanlage, vorzugsweise über die aktuelle Aufnahmekapazität jedes Bremskreises, erlaubt(en).

Ermittelt die Steuerung ECU einen Betriebszustand der Bremsanlage, der zu einer Verschlechterten Bremswirkung geführt hat, führt bzw. erwartungsgemäß dazu führen kann, steuert die Steuerung ECU die Bremsanlage wie im Folgenden anhand des Bremskreises I. erläutert.

Bei dieser Ausführungsform erfolgt die eine verschlechterte Bremswirkung kompensierende Steuerung der Bremsanlage durch die Steuerung ECU, wenn keine Betätigung der Bremsanlage stattfindet. Zunächst steuert die Steuerung ECU das Ventil 71 und das Ventil 72 so an, dass das Ventil 71 einen geschlossenen Betriebszustand bzw. eine Sperrstellung und das Ventil 72 einen offenen Betriebszustand bzw. eine Durchlassstellung einnehmen. Ferner wird die Pumpe 31 angesteuert, um Hydraulikfluid aus dem Hydraulikfluidspeicher oder Behälter 11 über das Ventil 72 anzusaugen und den Radbremsen 50 und 60 zuzuführen. Dabei werden die Radbremsen 50 und 60 mit einer Menge an Hydraulikfluid "vorgefüllt", um die erhöhte Aufnahmekapazität des Bremskreises I. auszugleichen, bevor ein Bremsvorgang stattfindet. Insbesondere ist es hier vorgesehen, den Radbremsen 50 und 60 eine Hydraulikfluidmenge zuzuführen, die der Kapazitätserhöhung entspricht.

Ist die Menge an Hydraulikfluid zur Kompensation der erhöhten Aufnahmekapazität zugeführt, kann, wenn (noch) kein Bremsvorgang eingeleitet wird, die Steuerung ECU das Ventil 72 so ansteuern, dass es eine geschlossene Betriebsposition oder Sperrstellung einnimmt. Dies verhindert einen Fluss von Hydraulikfluid aus den Radbremsen 50 und 60 heraus und hält das zum Vorfüllen zugeführte Hydraulikfluid in den Radbremsen 50 und 60. Ferner ist es dabei vorgesehen, dass die Pumpe 31 von der Steuerung ECU so angesteuert wird, dass sie kein weiteres Hydraulikfluid, beispielsweise aus dem Hydraulikfluidspeicher oder Niederdruckspeicher 21, den Radbremsen 50 und 60 zuführt.

Wenn die Bremsanlage durch den Fahrer betätigt wird, steuert die Steuerung ECU das Ventil 71 so an, dass es eine offene Betriebsstellung oder Durchlassstellung einnimmt. Dies ermöglicht den Aufbau von Bremsdruck in den Radbremsen 50 und 60 durch eine Betätigung des Pedals 13 auf die oben beschriebene Weise. Erfolgt die Betätigung der Bremsanlage durch den Fahrer, wenn das Ventil 72 zum Halten von Hydraulikfluid in den Radbremsen 50 und 60 geschlossen ist, hält die Steuerung ECU das Ventil 72 in dieser Betriebsposition. Andernfalls bringt die Steuerung ECU das Ventil 72 aus der offenen Betriebsposition in die geschlossene Betriebsposition oder Sperrstellung. Ferner ist es vorgesehen, dass die Pumpe 31 so angesteuert wird, dass sie in für bei vom Fahrer gesteuerten Bremsvorgänge vorgesehener Weise (z.B. Antiblockierregelung) betrieben werden kann.

Durch die vor einer Betätigung der Bremsanlage durch den Fahrer den Radbremsen 50 und 60 zugeführten Menge an Hydraulikfluid zur Kompensation der erhöhten Aufnahmekapazität wird erreicht, dass durch eine Betätigung des Pedals 13 dem Bremskreis I. zugeführte Menge an Hydraulikfluid nicht zum Ausgleich der erhöhten Aufnahmekapazität verwendet wird, sondern im Wesentlichen verlustfrei eine Bremswirkung verursachende Bremsdruckerhöhung zur Folge hat.

Wird nach dem Vorfüllen der Radbremsen 50 und 60 die Bremsanlage für einen automatischen Bremsvorgang betrieben, wird das Ventil 71 in der geschlossenen Betriebsposition bzw. Sperrstellung gehalten. Das Ventil 72 wird ebenfalls in seiner bisherigen Position, nämlich der offenen Betriebsposition bzw. Durchlassstellung gehalten, falls das Ventil 72 nicht, wie oben beschrieben, zum Halten von Hydraulikfluid in den Radbremsen 50 und 60 geschlossen wurde. Des Weiteren steuert die Steuerung ECU die Pumpe 31 so an, dass ein gewünschter automatischer Bremsvorgang erfolgt.

Hier hat das Vorfüllen der Radbremsen 50 und 60 zur Folge, dass die Pumpe 31 beim Durchführen eines Bremsvorgangs kein Hydraulikfluid den Radbremsen 50 und 60 zuführen muss, um die erhöhte Aufnahmekapazität auszugleichen, da dies bereits vor Einleiten des automatischen Bremsvorgangs durchgeführt wurde.

Vorzugsweise erfolgt das Vorfüllen der Radbremsen 50 und 60 in Abhängigkeit von Betriebs- bzw. Fahrzuständen des Landfahrzeugs. Beispielsweise ist es vorgesehen, ein Vorfüllen der Radbremsen 50 und 60, falls erforderlich, einzuleiten, wenn die Steuerung ECU einen Betriebs- bzw. Fahrzustand ermittelt, der einen Bremsvorgang erwarten lässt. Beispielsweise ist es möglich, der Steuerung ECU Parameter zuzuführen, die betätigungsabhängige Stellungen und/oder Bewegungen eines Fahr- bzw. Gaspedals angeben, um beispielsweise einen Wechsel vom Fahr- bzw. Gaspedal auf das Bremspedal 13 und damit einen zur erwartenden Bremsvorgang erkennen zu können. Auch andere Parameter, die Fahr- bzw. Betriebszustände des Fahrzeugs angeben, die möglicherweise zu einem Bremsvorgang führen, sind vorgesehen, wie z.B. kritische Fahrzustände bei Kurvenfahrt mit hoher Geschwindigkeit, Abstand zu vorausfahrenden Fahrzeugen und dergleichen.

Bei einer anderen Ausführungsform, bei der kein" vorausschauendes" Vorfüllen der Radbremsen 50 und 60 vorgesehen ist, erfolgt der Ausgleich einer erhöhten Aufnahmekapazität für Hydraulikfluid während eines Bremsvorgangs.

Um während eines Bremsvorgangs eine erhöhte Aufnahmekapazität, insbesondere auf der Grundlage von hierfür relevanten Temperaturen der Bremsanlage, können alternativ oder ergänzend zu den oben genannten Parametern einzelne oder mehrere der folgenden Parameter verwendetet werden:
- beim Bremsvorgang im Hauptzylinder 12 erzeugter Bremsdruck
- Bremsentemperatur(en), insbesondere an einer Vorderachse
- Verhältnis von Fahrzeugverzögerung und im Hauptzylinder 12 erzeugtem Bremsdruck

Hat die Steuerung ECU eine verschlechterte Bremswirkung aufgrund erhöhter Aufnahmekapazität für Hydraulikfluid ermittelt, steuert die Steuerung ECU die Bremsanlage so, wie es oben für einen automatischen Bremsvorgang beschrieben ist. Im Unterschied zu einem normalen automatischen Bremsvorgang erfolgt die Steuerung hier so, dass wenigstens einer Radbremse eine Hydraulikfluidmenge zugeführt wird, die für diese Radbremse(n) bzw. ein damit zusammenwirkendes Fahrzeugrad zu einem Betriebszustand führt, der eine Antiblockierregelung zur Folge hat. Erkennt die Steuerung ECU einen solchen, eine Antiblockierregelung erfordernden Betriebszustand, wird die entsprechende Radbremse gemäß der oben beschriebenen Antiblockierregelung mit Hydraulikfluid versorgt.

Vorteilhafterweise wird ein eine Antiblockierregelung erfordernder Betriebszustand für wenigstens eine Radbremse bzw. Rad erreicht, die bzw. das einer Vorderachse des Fahrzeugs zugeordnet ist.

Die Zufuhr der bei dieser Ausführungsform vorgesehenen Hydraulikfluidmenge erfolgt unabhängig von Betätigungen der Bremsanlage mittels des Pedals 13. Daher wird auch bei einem durch den Fahrer gesteuerten Bremsvorgang kein vom Fahrer erzeugter Bremsdruck zum Ausgleich der erhöhten Aufnahmekapazität verwendet.

Den Bremsdruck durch gesteuerte Zufuhr von Hydraulikfluid aus dem Hauptzylinder 12 so zu erhöhen, dass bezüglich wenigstens einer Radbremse eine Antiblockierregelung erforderlich ist, hat den Vorteil, dass die zusätzlich zugeführte Menge an Hydraulikfluid tatsächlich zum Ausgleich der erhöhten Aufnahmekapazität ausreicht. Bei einer geringeren Menge an zugeführtem Hydraulikfluid, die keine Antiblockierregelung zur Folge hat, ist es möglich, dass weniger Hydraulikfluid zugeführt wird, als zur Kompensation der erhöhten Aufnahmekapazität erforderlich ist.

## Patentansprüche

1. Hydraulische Bremsanlage für ein Landfahrzeug, mit
- einer Steuerung (ECU) mit Eingängen zum Empfang von Eingangsparametern, die Betriebszustände des Landfahrzeugs angeben, und Ausgängen zur Ausgabe von Steuersignalen (a, ..., g) für die Bremsanlage,
- wenigstens einer Radbremse (50, 60),
- wenigstens einem Hydraulikfluidspeicher (11, 21) zur Speicherung von Hydraulikfluid,
- einer steuerbaren Pumpe (31) zur gesteuerten Zufuhr von Hydraulikfluid aus dem Hydraulikfluidspeicher (11) zu der wenigstens einen Radbremse (50, 60), und
- einer vorbestimmten Aufnahmekapazität für Hydraulikfluid in vorbestimmten Bereichen und/oder Komponenten der Bremsanlage, wobei
- die Steuerung (ECU) eingerichtet ist, aus den Eingangsparametern eine aktuelle Aufnahmekapazität für Hydraulikfluid zu ermitteln, und, wenn die aktuelle Aufnahmekapazität gegenüber der vorbestimmten Aufnahmekapazität erhöht ist, Steuersignale für die Pumpe (31) bereitzustellen, um der wenigstens einen Radbremse (50, 60) eine Menge an Hydraulikfluid zuzuführen, die wenigstens der Kapazitätserhöhung entspricht.

2. Bremsanlage nach Anspruch 1, bei der die Steuerung (ECU) die aktuelle Aufnahmekapazität während eines unbetätigten Betriebszustands der Bremsanlage ermittelt.

3. Bremsanlage nach Anspruch 2, bei der die Steuerung (ECU) eingerichtet ist, Steuersignale für die Pumpe (31) bereitzustellen, um der wenigstens einen Radbremse (50, 60) während eines unbetätigten Betriebszustands der Bremsanlage eine erste Hydraulikfluidmenge zuzuführen, die der Kapazitätserhöhung entspricht.

4. Bremsanlage nach Anspruch 2 oder 3, bei der der Hydraulikfluidspeicher (11, 21) einen Hydraulikfluidspeicher (11) zur Versorgung eines Hauptzylinders (12) der Bremsanlage umfasst.

5. Bremsanlage nach einem der Ansprüche 1 bis 4, mit
- einer Ventilanordnung (71, 72, 73) mit einem ersten Betriebszustand, in dem eine erste hydraulische Verbindung zur Zufuhr von durch einen Fahrer erzeugtem Bremsdruck zu der wenigstens einen Radbremse (50, 60) gesperrt ist, und einem zweiten Betriebszustand, in dem die erste hydraulische Verbindung hergestellt ist, und
- bei der die Steuerung (ECU) eingerichtet ist, bei erhöhter Aufnahmekapazität, Steuersignale für die Ventilanordnung (71, 72, 73) bereitzustellen, um die Ventilanordnung (71, 72, 73) in den ersten Betriebzustand zu bringen.

6. Bremsanlage nach Anspruch 5, bei der
- die Ventilanordnung (71, 72, 73) einen dritten Betriebszustand aufweist, in dem die erste hydraulische Verbindung gesperrt ist und eine zweite hydraulische Verbindung zwischen der Eingangsseite der Pumpe (31) und dem Hydraulikfluidspeicher (11) gesperrt ist, und
- die Steuerung (ECU) eingerichtet ist, Steuersignale für die Ventilanordnung (71, 72, 73), um die Ventilanordnung (71, 72, 73) in den dritten Betriebzustand zu bringen, und Steuersignale für die Pumpe (31) bereitzustellen, um den Betrieb der Pumpe (32) zu beenden, wenn die erste Hydraulikfluidmenge zugeführt ist.

7. Bremsanlage nach einem der Ansprüche 1 bis 6, bei der die Steuerung (ECU) eingerichtet ist, die Steuersignale für die Pumpe (31) zu einem von wenigstens einem der Eingangsparameter abhängigen Zeitpunkt bereitzustellen.

8. Bremsanlage nach Anspruch 1, bei der die Steuerung (ECU) die aktuelle Aufnahmekapazität während eines betätigten Betriebszustands der Bremsanlage ermittelt.

9. Bremsanlage nach Anspruch 1 oder 8, bei der die Steuerung (ECU) eingerichtet ist, Steuersignale für die Pumpe (31) bereitzustellen, um der wenigstens einen Radbremse (50, 60) während eines betätigten Betriebszustands der Bremsanlage eine zweite Hydraulikfluidmenge zuzuführen, die zu einem eine Antiblockierregelung erfordernden Betriebszustand wenigstens einer der wenigstens einen Radbremse (50, 60) führt.

10. Bremsanlage nach Anspruch 8 oder 9,
- mit einer Ventilanordnung (71, 72, 73) mit einem ersten Betriebszustand, in dem eine erste hydraulische Verbindung zur Zufuhr von durch einen Fahrer erzeugtem Bremsdruck zu der wenigstens einen Radbremse (50, 60) gesperrt ist, und einem zweiten Betriebszustand, in dem die erste hydraulische Verbindung hergestellt ist, und
- bei der die Steuerung (ECU) eingerichtet ist, wenn die Ventilanordnung (71 72, 73) den zweiten Betriebszustand aufweist, Steuersignale für die Pumpe (31) bereitzustellen, um der wenigstens einen Radbremse (50, 60) die zweite Hydraulikfluidmenge zuzuführen.

11. Bremsanlage nach einem der Ansprüche 8 bis 10, bei der der Hydraulikfluidspeicher (11, 21) einen Niederdruckhydraulikfluidspeicher (21) der Bremsanlage umfasst.

12. Bremsanlage nach einem der Ansprüche 8 bis 11, bei der die Steuerung (ECU) eingerichtet ist, Steuersignale bereitzustellen, um wenigstens einer als Radbremse für eine Vorderachse des Landfahrzeugs vorgesehenen Radbremse (50, 60) die zweite Hydraulikfluidmenge zuzuführen.

13. Bremsanlage nach einem der vorherigen Ansprüche, bei der die Steuerung (ECU) eingerichtet ist, anhand eines oder mehrerer der folgenden Eingangsparameter die Aufnahmekapazitätserhöhung zu ermitteln:
- Zahl von Betätigungen der Bremsanlage innerhalb eines vorgegebenen Zeitraums,
- Höhe von Bremsdrücken in der Bremsanlage für aufeinander folgende Betätigungen der Bremsanlage,
- Verhältnis von Drehzahl von der wenigstens einen Radbremse (50, 60) zugeordneten Rädern und Geschwindigkeit und/oder Verzögerung des Landfahrzeugs,
- Temperatur der wenigstens eine Radbremse (50, 60),
- Bremsdruck in einem Hauptzylinder (12) der Bremsanlage, und
- Verhältnis von Verzögerung des Landfahrzeugs und Bremsdruck in einem Hauptzylinder (12) der Bremsanlage.

14. Verfahren zur Steuerung einer hydraulischen Bremsanlage für ein Landfahrzeug mit wenigstens einer Radbremse (50, 60) und einer vorbestimmten Aufnahmekapazität für Hydraulikfluid in vorbestimmten Bereichen und/oder Komponenten der Bremsanlage mit folgenden Schritten:
- Ermitteln, ob sich eine ermittelte aktuelle Aufnahmekapazität der Bremsanlage gegenüber der vorbestimmten Aufnahmekapazität erhöht hat, und, wenn dies der Fall ist,
- gesteuertes Zuführen von Hydraulikfluid zu der wenigstens einen Radbremse (50, 60) in einer Menge, die wenigstens der Kapazitätserhöhung entspricht.

15. Verfahren nach Anspruch 14, bei dem der wenigstens einen Radbremse (50, 60) eine der Kapazitätserhöhung entsprechende erste Hydraulikfluidmenge zugeführt wird.

16. Verfahren nach Anspruch 14 oder 15, bei dem die aktuelle Aufnahmekapazität während eines unbetätigten Betriebszustands der Bremsanlage ermittelt wird.

17. Verfahren nach einem der Ansprüche 14 bis 16, bei dem die erste Hydraulikfluidmenge während eines unbetätigten Betriebszustands der Bremsanlage zugeführt wird.

18. Verfahren nach einem der Ansprüche 14 bis 17, bei dem während des Zuführens der ersten Hydraulikfluidmenge eine Betätigung der Bremsanlage durch einen Fahrer verhindert wird.

19. Verfahren nach einem der Ansprüche 14 bis 18, bei dem die erste Hydraulikfiluidmenge in der wenigstens einen Radbremse (50, 60) bis zu einer nachfolgenden Betätigung der Bremsanlage gehalten wird.

20. Verfahren nach einem der Ansprüche 14 bis 19, bei dem die erste Hydraulikfluidmenge zu einem Zeitpunkt zugeführt wird, der in Abhängigkeit von Betriebszuständen der Bremsanlage ermittelt wird.

21. Verfahren nach Anspruch 14, bei dem die aktuelle Aufnahmekapazität während eines betätigten Betriebszustands der Bremsanlage ermittelt wird.

22. Verfahren nach Anspruch 14 oder 21, bei dem wenigstens einer Radbremse (50, 60) während eines betätigten Betriebszustands der Bremsanlage eine zweite Hydraulikfluidmenge zugeführt wird, die zu einem eine Antiblockierregelung erfordernden Betriebszustand dieser Radbremse (50, 60) führt.

23. Verfahren nach einem der Ansprüche 14 bis 22, bei dem die wenigstens eine Radbremse (50, 60), der Hydraulikfluid zugeführt wird, eine Vorderradbremse ist.

24. Verfahren nach einem der Ansprüche 14 bis 23, bei dem die Aufnahmekapazitätserhöhung anhand eines oder mehrerer folgender Parameter ermittelt wird:
- Zahl von Betätigungen der Bremsanlage innerhalb eines vorgegebenen Zeitraums,
- Höhe von Bremsdrücken in der Bremsanlage für aufeinander folgende Betätigungen der Bremsanlage,
- Verhältnis von Drehzahl von der wenigstens einen Radbremse (50, 60) zugeordneten Rädern und Geschwindigkeit und/oder Verzögerung des Landfahrzeugs,
- Temperatur der wenigstens eine Radbremse (50, 60),
- Bremsdruck in einem Hauptzylinder (12) der Bremsanlage, und
- Verhältnis von Verzögerung des Landfahrzeugs und Bremsdruck in einem Hauptzylinder (12) der Bremsanlage.

## Claims

1. Hydraulic brake system for a land vehicle, with
- a control unit (ECU) with inputs to receive input parameters, which indicate operational states of the land vehicle, and outputs to output control signals (a, ..., g) for the brake system,
- at least one wheel brake (50, 60),
- at least one hydraulic fluid reservoir (11, 21) to store hydraulic fluid,
- a controllable pump (31) for controlled feeding of hydraulic fluid out of the hydraulic fluid reservoir (11) to the at least one wheel brake (50, 60), and
- a predetermined holding capacity for hydraulic fluid in predetermined regions and/or components of the brake system, wherein
- the control unit (ECU) being set up to determine a current holding capacity for hydraulic fluid from the input parameters, and if the current holding capacity is increased compared with the predetermined holding capacity, to provide control signals for the pump (31), to feed a quantity of hydraulic fluid corresponding at least to the capacity increase to the at least one wheel brake (50, 60).

2. Brake system according to Claim 1, wherein the control unit (ECU) determines the current holding capacity during an unactuated operational state of the brake system.

3. Brake system according to Claim 2, wherein the control unit (ECU) is set up to provide control signals for the pump (31), to feed a first quantity of hydraulic fluid, corresponding to the capacity increase, to the at least one wheel brake (50, 60) during an unactuated operational state of the brake system.

4. Brake system according to Claim 2 or 3, wherein the hydraulic fluid reservoir (11, 21) includes a hydraulic fluid reservoir (11) to supply a main cylinder (12) of the brake system.

5. Brake system according to one of Claims 1 to 4, with
- a valve arrangement (71, 72, 73) with a first operational state, in which a first hydraulic connection to feed braking pressure which a driver generates to the at least one wheel brake (50, 60) is blocked, and a second operational state, in which the first hydraulic connection is made, and
- wherein the control unit (ECU) is set up to provide, in the case of increased holding capacity, control signals for the valve arrangement (71, 72, 73), to bring the valve arrangement (71, 72, 73) into the first operational state.

6. Brake system according to Claim 5, wherein
- the valve arrangement (71, 72, 73) has a third operational state, in which the first hydraulic connection is blocked and a second hydraulic connection between the input side of the pump (31) and the hydraulic fluid reservoir (11) is blocked, and
- the control unit (ECU) is set up to provide control signals for the valve arrangement (71, 72, 73), to bring the valve arrangement (71, 72, 73) into the third operational state, and control signals for the pump (31), to end operation of the pump (32) when the first quantity of hydraulic fluid is fed.

7. Brake system according to one of Claims 1 to 6, wherein the control unit (ECU) is set up to provide the control signals for the pump (31) at an instant which depends on at least one of the input parameters.

8. Brake system according to Claim 1, wherein the control unit (ECU) determines the current holding capacity during an actuated operational state of the brake system.

9. Brake system according to Claim 1 or 8, wherein the control unit (ECU) is set up to provide control signals for the pump (31), to feed a second quantity of hydraulic fluid to the at least one wheel brake (50, 60) during an actuated operational state of the brake system, resulting in an operational state, which requires anti-lock regulation, of at least one of the at least one wheel brake (50, 60).

10. Brake system according to Claim 8 or 9,
- with a valve arrangement (71, 72, 73) with a first operational state, in which a first hydraulic connection to feed braking pressure which a driver generates to the at least one wheel brake (50, 60) is blocked, and a second operational state, in which the first hydraulic connection is made,
- wherein the control unit (ECU) is set up to provide, if the valve arrangement (71, 72, 73) has the second operational state, control signals for the pump (31), to feed the second quantity of hydraulic fluid to the at least one wheel brake (50, 60).

11. Brake system according to one of Claims 8 to 10, wherein the hydraulic fluid reservoir (11, 21) includes a low pressure hydraulic fluid reservoir (21) of the brake system.

12. Brake system according to one of Claims 8 to 11, wherein the control unit (ECU) is set up to provide control signals, to feed the second quantity of hydraulic fluid to at least one wheel brake (50, 60) which is provided as a wheel brake for a front axle of the land vehicle.

13. Brake system according to one of the preceding claims, wherein the control unit (ECU) is set up to determine the holding capacity increase on the basis of one or more of the following input parameters:
- number of actuations of the brake system within a specified period,
- amount of braking pressures in the brake system for successive actuations of the brake system,
- ratio of rotational speed of the wheels which are associated with the at least one wheel brake (50, 60) and speed and/or deceleration of the land vehicle,
- temperature of the at least one wheel brake (50, 60),
- braking pressure generated in a main cylinder (12) of the brake system, and
- ratio of deceleration of the land vehicle and braking pressure in a main cylinder (12) of the brake system.

14. Method of controlling a hydraulic brake system for a land vehicle with at least one wheel brake (50, 60) and a predetermined holding capacity for hydraulic fluid in predetermined regions and/or components of the brake system, with the following steps:
- determining whether a current holding capacity of the brake system has increased compared with the predetermined holding capacity, and if so
- controlled feeding of hydraulic fluid to the at least one wheel brake (50, 60), in a quantity corresponding at least to the capacity increase.

15. Method according to Claim 14, wherein a first quantity of hydraulic fluid corresponding to the capacity increase is fed to the at least one wheel brake (50, 60).

16. Method according to Claim 14 or 15, wherein the current holding capacity is determined during an unactuated operational state of the brake system.

17. Method according to one of Claims 14 to 16, wherein the first quantity of hydraulic fluid is fed to the brake system during an unactuated operational state of the brake system.

18. Method according to one of Claims 14 to 17, wherein while the first quantity of hydraulic fluid is being fed, actuation of the brake system by a driver is prevented.

19. Method according to one of Claims 14 to 18, wherein the first quantity of hydraulic fluid is kept in the at least one wheel brake (50, 60) until a subsequent actuation of the brake system.

20. Method according to one of Claims 14 to 19, wherein the first quantity of hydraulic fluid is fed at an instant which is determined depending on operational states of the brake system.

21. Method according to Claim 14, wherein the current holding capacity is determined during an actuated operational state of the brake system.

22. Method according to Claim 14 or 21, wherein a second quantity of hydraulic fluid is fed to at least one wheel brake (50, 60) during an actuated operational state of the brake system, resulting in an operational state of this wheel brake (50, 60) which requires anti-lock regulation.

23. Method according to one of Claims 14 to 22, wherein the at least one wheel brake (50, 60) to which hydraulic fluid is fed is a front wheel brake.

24. Method according to one of Claims 14 to 23, wherein the holding capacity increase is determined on the basis of one or more of the following parameters:
- number of actuations of the brake system within a specified period,
- amount of braking pressures in the brake system for successive actuations of the brake system,
- ratio of rotational speed of the wheels which are associated with the at least one wheel brake (50, 60) and speed and/or deceleration of the land vehicle,
- temperature of the at least one wheel brake (50, 60),
- braking pressure generated in a main cylinder (12) of the brake system, and
- ratio of deceleration of the land vehicle and braking pressure in a main cylinder (12) of the brake system.

## Revendications

1. Système de freinage hydraulique pour véhicule terrestre, comprenant
- une commande (ECU) pourvue d'entrées pour la réception de paramètres d'entrée indiquant les états de service du véhicule terrestre et de sorties pour la fourniture de signaux de commande (a, ..., g) destinés au système de freinage,
- au moins un frein de roue (50, 60),
- au moins un réservoir de fluide hydraulique (11, 21) pour stocker le fluide hydraulique,
- une pompe (31) pouvant être commandée pour l'alimentation contrôlée en fluide hydraulique dudit frein de roue (50, 60) à partir du réservoir de fluide hydraulique (11), et
- une capacité pour fluide hydraulique prédéterminée à l'intérieur de zones et/ou d'éléments du système de freinage prédéfinis,
- la commande (ECU) étant conçue pour déterminer à partir des paramètres d'entrée une capacité pour fluide hydraulique momentanée, et, lorsque la capacité momentanée est plus élevée que la capacité prédéterminée, pour fournir des signaux de commande destinés à la pompe (31) pour faire s'acheminer vers le frein de roue (50, 60) la quantité de fluide hydraulique correspondant au moins à l'augmentation de la capacité.

2. Système de freinage selon la revendication 1, dans le cadre duquel la commande (ECU) détermine la capacité momentanée pendant un état de service inactivé du système de freinage.

3. Système de freinage selon la revendication 2, dans le cadre duquel la commande (ECU) est conçue pour fournir des signaux de commande destinés à la pompe (31) pour faire s'acheminer vers le frein de roue (50, 60), pendant un état de service inactivé du système de freinage, une première quantité de fluide hydraulique correspondant à l'augmentation de la capacité.

4. Système de freinage selon la revendication 2 ou 3, dans le cadre duquel le réservoir de fluide hydraulique (11, 21) comprend un réservoir de fluide hydraulique (11) pour alimenter un maître-cylindre (12) du système de freinage.

5. Système de freinage selon l'une des revendications 1 à 4, comprenant
- un dispositif à soupape (71, 72, 73) avec un premier état de service dans lequel est bloquée une première liaison hydraulique pour l'alimentation du frein de roue (50, 60) en pression de freinage initiée par le conducteur, et avec un deuxième état de service dans lequel la première liaison hydraulique est établie, et
- dans le cadre duquel la commande (ECU) est conçue pour fournir, en cas de capacité accrue, des signaux de commande destinés au dispositif à soupape (71, 72, 73) pour amener le dispositif à soupape (71, 72, 73) dans le premier état de service.

6. Système de freinage selon la revendication 5, dans le cadre duquel
- le dispositif à soupape (71, 72, 73) présente un troisième état de service dans lequel sont bloquées la première liaison hydraulique et une deuxième liaison hydraulique entre le côté entrée de la pompe (31) et le réservoir de fluide hydraulique (11), et
- la commande (ECU) est conçue pour fournir des signaux de commande destinés au dispositif à soupape (71, 72, 73) pour amener ce dernier dans le troisième état de service et pour fournir des signaux de commande destinés à la pompe (31) pour faire cesser le fonctionnement de la pompe (32) lorsqu'est terminé l'acheminement de la première quantité de fluide hydraulique.

7. Système de freinage selon l'une des revendications 1 à 6, dans le cadre duquel la commande (ECU) est conçue pour fournir, à un moment donné défini en fonction d'au moins un des paramètres d'entrée, des signaux de commande destinés à la pompe (31).

8. Système de freinage selon la revendication 1, dans le cadre duquel la commande (ECU) détermine la capacité momentanée pendant un état de service actionné du système de freinage.

9. Système de freinage selon la revendication 1 ou 8, dans le cadre duquel la commande (ECU) est conçue pour fournir des signaux de commande destinés à la pompe (31) pour faire s'acheminer vers le frein de roue (50, 60) une deuxième quantité de fluide hydraulique pendant un état de service actionné du système de freinage, laquelle quantité conduit à un état de service du frein de roue (50, 60) qui exige une régulation antiblocage.

10. Système de freinage selon la revendication 8 ou 9,
- pourvu d'un dispositif à soupape (71, 72, 73) avec un premier état de service dans lequel est bloquée une première liaison hydraulique pour l'alimentation en pression de freinage initiée par le conducteur du frein de roue (50, 60), et avec un deuxième état de service dans lequel la première liaison hydraulique est établie, et
- dans le cadre duquel la commande (ECU) est conçue, lorsque dispositif à soupape (71, 72, 73) présente le deuxième état de service, pour fournir des signaux de commande destinés à la pompe (31) pour faire s'acheminer la deuxième quantité de fluide hydraulique jusqu'au frein de roue (50, 60).

11. Système de freinage selon l'une des revendications 8 à 10, dans le cadre duquel le réservoir de fluide hydraulique (11, 21) comprend un réservoir de fluide hydraulique à basse pression (21) du système de freinage.

12. Système de freinage selon l'une des revendications 8 à 11, dans le cadre duquel la commande (ECU) est conçue pour fournir des signaux de commande pour faire s'acheminer la deuxième quantité de fluide hydraulique jusqu'au frein de roue (50, 60) prévu comme frein de roue pour l'essieu avant du véhicule terrestre.

13. Système de freinage selon l'une des revendications précédentes, dans le cadre duquel la commande (ECU) est conçue pour déterminer l'augmentation de la capacité sur la base d'un ou plusieurs des paramètres d'entrée suivants :
- le nombre d'actionnements du système de freinage en l'espace d'une période prédéterminée,
- l'augmentation des pressions de freinage à l'intérieur du système de freinage pour des actionnements successifs du système de freinage,
- le rapport entre le régime des roues associées à un frein de roue (50, 60) et la vitesse et/ou le ralentissement du véhicule terrestre,
- la température du frein de roue (50, 60),
- la pression de freinage à l'intérieur d'un maître-cylindre du système de freinage, et
- le rapport entre le ralentissement du véhicule terrestre et la pression de freinage à l'intérieur du maître-cylindre du système de freinage.

14. Procédé pour commander un système de freinage hydraulique pour véhicule terrestre comprenant au moins un frein de roue (50, 60) et une capacité pour fluide hydraulique prédéterminée à l'intérieur de zones et/ou d'éléments prédéfinis du système de freinage, comportant les étapes suivantes :
- vérifier que la capacité momentanément déterminée du système de freinage n'a pas augmenté par rapport à la capacité prédéterminée, et, si cela est le cas,
- alimentation contrôlée en fluide hydraulique du frein de roue (50, 60) dans une quantité correspondant au moins à l'augmentation de la capacité.

15. Procédé selon la revendication 14, dans le cadre duquel une première quantité de fluide hydraulique correspondant à l'augmentation de la capacité est acheminée vers le frein de roue (50, 60).

16. Procédé selon la revendication 14 ou 15, dans le cadre duquel la capacité momentanée est déterminée pendant un état de service non actionné du système de freinage.

17. Procédé selon l'une des revendications 14 à 16, dans le cadre duquel la première quantité de fluide hydraulique est acheminée pendant un état de service non actionné du système de freinage.

18. Procédé selon l'une des revendications 14 à 17, dans le cadre duquel un actionnement du système de freinage est empêché par le conducteur pendant l'acheminement de la première quantité de fluide hydraulique.

19. Procédé selon l'une des revendications 14 à 18, dans le cadre duquel la première quantité de fluide hydraulique est maintenue à l'intérieur du frein de roue (50, 60) jusqu'au prochain actionnement du système de freinage.

20. Procédé selon l'une des revendications 14 à 19, dans le cadre duquel la première quantité de fluide hydraulique est acheminée à un moment déterminé en fonction des états de service du système de freinage.

21. Procédé selon la revendication 14, dans le cadre duquel la capacité momentanée est déterminée pendant un état de service actionné du système de freinage.

22. Procédé selon la revendication 14 ou 21, dans le cadre duquel une deuxième quantité de fluide hydraulique est acheminée jusqu'au frein de roue (50, 60), laquelle quantité conduit à un état de service du frein de roue (50, 60) qui exige une régulation antiblocage.

23. Procédé selon l'une des revendications 14 à 22, dans le cadre duquel ledit frein de roue (50, 60) alimenté en fluide hydraulique est un frein de roue avant.

24. Procédé selon l'une des revendications 14 à 23, dans le cadre duquel l'augmentation de la capacité est déterminée sur la base d'un ou de plusieurs des paramètres d'entrée suivants :
- le nombre d'actionnements du système de freinage en l'espace d'une période prédéterminée,
- l'augmentation des pressions de freinage à l'intérieur du système de freinage pour des actionnements successifs du système de freinage,
- le rapport entre le régime des roues associées au frein de roue (50, 60) et la vitesse et/ou le ralentissement du véhicule terrestre,
- la température du frein de roue (50, 60),
- la pression de freinage à l'intérieur d'un maître-cylindre (12) du système de freinage, et
- le rapport entre le ralentissement du véhicule terrestre et la pression de freinage à l'intérieur d'un maître-cylindre du système de freinage.
